(19) Europäisches Patentamt
European Patent Office
Office européen des brevets

(11) EP 4 296 325 B1

(12) **EUROPEAN PATENT SPECIFICATION**

(45) Date of publication and mention of the grant of the patent:
**13.05.2026 Bulletin 2026/20**

(21) Application number: **22756481.2**

(22) Date of filing: **16.02.2022**

(51) International Patent Classification (IPC):
***C09D 175/16*** ^(2006.01) ***C09D 7/63*** ^(2018.01)
***C09D 7/65*** ^(2018.01) ***C08L 63/00*** ^(2006.01)
***C09D 5/00*** ^(2006.01) ***C08F 290/06*** ^(2006.01)
***C08G 18/48*** ^(2006.01) ***C08G 18/66*** ^(2006.01)
***C08G 18/73*** ^(2006.01) ***C08G 18/76*** ^(2006.01)
***C08G 18/32*** ^(2006.01) ***C08G 18/75*** ^(2006.01)
***C08G 18/67*** ^(2006.01)

(52) Cooperative Patent Classification (CPC):
(C-Sets available)
**C09D 175/16; C08F 290/067; C08G 18/3212; C08G 18/4825; C08G 18/4833; C08G 18/4883; C08G 18/6674; C08G 18/672; C08G 18/73; C08G 18/755; C08G 18/7671; C09D 5/00** (Cont.)

(86) International application number:
**PCT/KR2022/002269**

(87) International publication number:
**WO 2022/177283 (25.08.2022 Gazette 2022/34)**

(54) **COATING COMPOSITION, FOR METAL, WITH IMPROVED OIL RESISTANCE AND ADHESIVENESS AND A PREPARATION METHOD THEREFOR, AND A METAL ARTICLE COATED WITH COMPOSITION**

BESCHICHTUNGSZUSAMMENSETZUNG FÜR METALL MIT VERBESSERTER ÖLBESTÄNDIGKEIT UND HAFTUNG UND HERSTELLUNGSVERFAHREN DAFÜR SOWIE MIT DER ZUSAMMENSETZUNG BESCHICHTETER METALLARTIKEL

COMPOSITION DE REVÊTEMENT POUR MÉTAL AYANT UNE RÉSISTANCE À L'HUILE ET UNE ADHÉSIVITÉ AMÉLIORÉES ET PROCÉDÉ DE PRÉPARATION ASSOCIÉ, ET ARTICLE MÉTALLIQUE REVÊTU DE LA COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2021 KR 20210020898**

(43) Date of publication of application:
**27.12.2023 Bulletin 2023/52**

(73) Proprietor: **Samyang Corporation**
**Jongno-gu**
**Seoul 03129 (KR)**

(72) Inventors:
- **LEE, Jae Hoon**
  **Daejeon 34049 (KR)**
- **IM, Jun Seop**
  **Hwaseong-si Gyeonggi-do 18496 (KR)**

(74) Representative: **Wohlfahrt, Jan Günther et al**
**Gleiss Große Schrell und Partner mbB**
**Patentanwälte Rechtsanwälte**
**Leitzstraße 45**
**70469 Stuttgart (DE)**

(56) References cited:
**EP-A1- 2 990 428**
**WO-A1-2014/174861**
**KR-A- 20100 073 809**
**KR-A- 20180 102 216**
**KR-B1- 100 649 432**
**KR-B1- 101 912 193**
**KR-B1- 102 161 451**
**US-A1- 2011 250 415**
**US-A1- 2020 291 260**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 290/067, C08F 220/20;**
**C08G 18/672, C08G 18/48**

## Description

### TECHNICAL FIELD

The present invention relates to a coating composition for metal with improved oil resistance and adhesion and a method for preparing the same, and a metallic article coated with the composition, and more specifically, the present invention relates to a coating composition which comprises (meth)acryl-modified polyurethane comprising polymerized units derived from anhydrosugar alcohol-alkylene oxide adduct, (meth)acrylic monomer, and epoxy resin, and can provide a coating with excellent adhesion to metal and improved oil resistance at the same time, and a method for preparing the same, and a metallic article coated with the composition.

### BACKGROUND ART

Polyols and isocyanates, which are essential components for polyurethane, are usually prepared from petroleum-based raw materials. However, in the field of polyurethane, due to various reasons such as accelerated depletion of petroleum resources, demand to reduce greenhouse gas emissions according to climate change, rise of raw material prices, and increasing need for recyclable raw materials, a method for partially or completely replacing polyols and isocyanates prepared from petroleum-based raw materials with environmentally friendly components has been requested.

Polyols can be produced from recyclable biomass such as natural vegetable oils, cellulose, lignin, etc., and biopolyols derived from natural vegetable oils are already being produced on a commercial scale. The properties of biopolyol produced become different according to the type of biomass used for the production. In general, castor oil, palm oil, etc. are used for the production of soft and hard polyurethanes and synthetic polyols, and soybean oil is used for the production of polyols for soft polyurethane. However, the currently produced biomass-based biopolyol has a disadvantage in that it has a high viscosity.

Natural vegetable oil-based isocyanates are essentially aliphatic compounds, which have a disadvantage in that they are less reactive than aromatic diisocyanates which are based on petroleum. Therefore, research on preparing diisocyanate using biomass has not been conducted much.

Hydrogenated sugar (also referred to as "sugar alcohol") means a compound obtained by adding hydrogen to the reductive end group in sugar, and generally has a chemical formula of $HOCH_2(CHOH)_nCH_2OH$ wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

Anhydrosugar alcohol is a material formed by removing one or more molecules of water from inside of the hydrogenated sugar. It has a tetraol form with four hydroxyl groups in the molecule when one molecule of water is removed, and a diol form with two hydroxyl groups in the molecule when two molecules of water are removed, and can be produced by using hexitol derived from starch (for example, Korean Patent No. 10-1079518 and Korean Laid-open Patent Publication No. 10-2012-0066904). Because anhydrosugar alcohol is an environmentally friendly material derived from recyclable natural resources, it has received much interest for a long time and researches on its production continue to proceed. Among such anhydrosugar alcohols, isosorbide produced from sorbitol has the widest industrial applicability at present.

Anhydrosugar alcohol can be used in various fields including treatment of heart and blood vessel diseases, patch adhesive, medicaments such as mouthwash, etc., solvents for compositions in the cosmetics industry, emulsifiers in the food industry, etc. In addition, it can increase the glass transition temperature of polymer materials like polyester, PET, polycarbonate, polyurethane, epoxy resin, etc., and improve the strength of such materials. Furthermore, because anhydrosugar alcohol is an environmentally friendly material derived from natural resources, it is very useful in the plastics industry such as bioplastics and the like. It is also known that anhydrosugar alcohol can be used as an adhesive, environmentally friendly plasticizer, biodegradable polymer, and environmentally friendly solvent for water-soluble lacquer.

As such, anhydrosugar alcohol is receiving much interest because of its wide applicability, and the level of practical industrial application thereof is increasing. Coating compositions comprising urethane acrylates derived from anhydrosugar alcohols are for instance described in EP 2 990 428 A1.

Korean Laid-open Patent Publication No. 10-2017-0125328 discloses preparation of an electroconductive adhesive for metal-metal interface from acryl-modified polyurethane and other acrylic monomers in the presence of thermal polymerization initiator. However, an adhesive composition prepared as such has insufficient oil resistance and adhesion thereof should be further improved.

## PROBLEMS TO BE SOLVED

The purpose of the present invention is to provide a coating composition for metal which utilizes (meth)acryl-modified polyurethane comprising polymerized units derived from anhydrosugar alcohol derivative, and thus can provide a coating with excellent adhesion to metal and improved oil resistance at the same time as well as good eco-friendliness, and a method for preparing the same, and a metallic article coated with the composition.

## TECHNICAL MEANS

In order to achieve the above-stated purpose, the present invention provides a coating composition for metal comprising, based on total 100 parts by weight of the composition, 5.1 to 64.9 parts by weight of (meth)acryl-modified polyurethane; 7.1 to 74.9 parts by weight of (meth)acrylic monomer; 2.1 to 44.9 parts by weight of epoxy resin; 0.051 to 2.49 parts by weight of epoxy curing promotor; and 0.00051 to 2.49 parts by weight of thermal polymerization initiator, wherein the (meth)acryl-modified polyurethane comprises i) polymerized units derived from anhydrosugar alcohol-alkylene oxide adduct; ii) polymerized units derived from polyisocyanate; and iii) polymerized units derived from hydroxyalkyl (meth)acrylate.

In other aspect, the present invention provides a method for preparing a coating composition for metal, comprising the step of mixing, based on total 100 parts by weight of the mixture, 5.1 to 64.9 parts by weight of (meth) acryl-modified polyurethane; 7.1 to 74.9 parts by weight of (meth)acrylic monomer; 2.1 to 44.9 parts by weight of epoxy resin; 0.051 to 2.49 parts by weight of epoxy curing promotor; and 0.00051 to 2.49 parts by weight of thermal polymerization initiator, wherein the (meth)acryl-modified polyurethane comprises i) polymerized units derived from anhydrosugar alcohol-alkylene oxide adduct; ii) polymerized units derived from polyisocyanate; and iii) polymerized units derived from hydroxyalkyl (meth)acrylate.

In another aspect, the present invention provides a coated metallic article comprising a metallic article; and a coating layer of the coating composition for metal of the present invention on the surface of the metallic article.

## EFFECT OF THE INVENTION

The coating composition for metal according to the present invention has excellent adhesion to metal and excellent oil resistance after the coating at the same time, and high curing rate, and thus it can provide a coating with excellent adhesion and oil resistance on metal surface rapidly, and also has good eco-friendliness since it utilizes anhydrosugar alcohol derived from natural resources.

## CONCRETE MODE FOR CARRYING OUT THE INVENTION

The present invention is explained in more detail below.

The coating composition for metal of the present invention comprises (meth)acryl-modified polyurethane; (meth) acrylic monomer; epoxy resin; epoxy curing promotor; and thermal polymerization initiator.

### [(Meth)acryl-modified polyurethane]

The (meth)acryl-modified polyurethane comprised in the present coating composition for metal comprises i) polymerized units derived from anhydrosugar alcohol-alkylene oxide adduct; ii) polymerized units derived from polyisocyanate; and iii) polymerized units derived from hydroxyalkyl (meth)acrylate.

The anhydrosugar alcohol-alkylene oxide adduct (also referred to as "anhydrosugar alcohol-alkylene glycol") is an adduct obtained by reacting hydroxyl group(s) at both ends or one end (preferably both ends) of anhydrosugar alcohol with alkylene oxide, and it means a compound in a form wherein hydrogen(s) of hydroxyl group(s) at both ends or one end (preferably both ends) of anhydrosugar alcohol is(are) substituted with hydroxyalkyl group(s) which is a ring-opened form of alkylene oxide.

In an embodiment, the alkylene oxide may be a linear alkylene oxide having 2 to 8 carbons or a branched alkylene oxide having 3 to 8 carbons, and more concretely, it may be selected from ethylene oxide, propylene oxide or a combination thereof.

The anhydrosugar alcohol can be prepared by dehydration reaction of hydrogenated sugar derived from natural product. Hydrogenated sugar (also referred to as "sugar alcohol") means a compound obtained by adding hydrogen to the reductive end group in sugar, and generally has a chemical formula of $HOCH_2(CHOH)_nCH_2OH$ wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

The anhydrosugar alcohol may be monoanhydrosugar alcohol, dianhydrosugar alcohol or a mixture thereof, and although it is not especially limited, dianhydrosugar alcohol can be used.

Monoanhydrosugar alcohol is an anhydrosugar alcohol formed by removing one molecule of water from inside of the hydrogenated sugar, and it has a tetraol form with four hydroxyl groups in the molecule. In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or a mixture of two or more of the foregoing.

Dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environmentally friendly material derived from recyclable natural resources, it has received much interest for a long time and researches on its production continue to proceed. Among such dianhydrosugar alcohols, isosorbide produced from sorbitol has the widest industrial applicability at present.

In the present invention, the kind of the dianhydrosugar alcohol is not especially limited, and it may be preferably dianhydrohexitol, and more concretely 1,4:3,6-dianhydrohexitol. 1,4:3,6-dianhydrohexitol may be isosorbide, isomannide, isoidide or a mixture of two or more of the foregoing.

In an embodiment, the anhydrosugar alcohol-alkylene oxide adduct may be a compound represented by the following formula 1, or a mixture of two or more of such compounds.

[Formula 1]

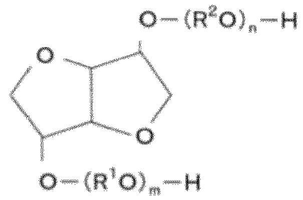

In the above formula 1,

each of $R^1$ and $R^2$ independently represents a linear alkylene group having 2 to 8 carbons or a branched alkylene group having 3 to 8 carbons,
each of m and n independently represents an integer of 0 to 15, and
m+n represents an integer of 1 to 30.

More preferably, in the above formula 1,

each of $R^1$ and $R^2$ independently represents ethylene group, propylene group or isopropylene group, and preferably $R^1$ and $R^2$ are the same, and
each of m and n independently represents an integer of 0 to 14,
provided that m+n is an integer of 1 or more, 2 or more, or 3 or more, and an integer of 25 or less, 20 or less, 15 or less, or 12 or less, and for example, it represents an integer of 1 to 25, preferably an integer of 2 to 20, and more preferably an integer of 3 to 15.

In an embodiment, the anhydrosugar alcohol-alkylene oxide adduct may be anhydrosugar alcohol-propylene oxide adduct represented by the following formula 1-1, anhydrosugar alcohol-ethylene oxide adduct represented by the following formula 1-2, or a mixture thereof.

[Formula 1-1]

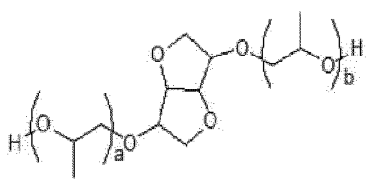

In the above formula 1-1,

each of a and b independently represents an integer of 0 to 15, and
a+b represents an integer of 1 to 30.

More preferably, in the above formula 1-1,

each of a and b independently represents an integer of 0 to 14,
provided that a+b is an integer of 1 or more, 2 or more, or 3 or more, and an integer of 25 or less, 20 or less, 15 or less, or 12 or less, and for example, it represents an integer of 1 to 25, preferably an integer of 2 to 20, and more preferably an integer of 3 to 15.

[Formula 1-2]

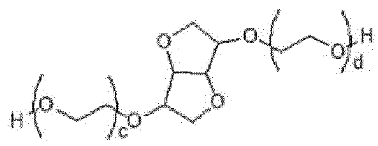

In the above formula 1-2,

each of c and d independently represents an integer of 0 to 15, and
c+d represents an integer of 1 to 30.

More preferably, in the above formula 1-2,

each of c and d independently represents an integer of 0 to 14,
provided that c+d is an integer of 1 or more, 2 or more, or 3 or more, and an integer of 25 or less, 20 or less, 15 or less, or 12 or less, and for example, it represents an integer of 1 to 25, preferably an integer of 2 to 20, and more preferably an integer of 3 to 15.

In an embodiment, the anhydrosugar alcohol-alkylene oxide adduct may be that prepared by a preparation method comprising the steps of: (1) treating anhydrosugar alcohol with acid component; and (2) conducting addition reaction of the acid-treated anhydrosugar alcohol obtained in said step (1) and alkylene oxide.

More concretely, the anhydrosugar alcohol-alkylene oxide adduct may be that prepared by a preparation method comprising the steps of: (1) treating anhydrosugar alcohol with acid component; (2) conducting addition reaction of the acid-treated anhydrosugar alcohol obtained in said step (1) and alkylene oxide; and (3) conducting addition reaction of the product obtained in said step (2) and alkylene oxide in the presence of base catalyst.

The acid component is not especially limited, and it may be selected from the group consisting of phosphoric acid, sulfuric acid, acetic acid, formic acid, heteropolyacid or a mixture thereof. In an embodiment, as the heteropolyacid, phosphotungstic acid, phosphomolybdic acid, silicotungstic acid or silicomolybdic acid, etc. may be used, and as other useful acid component, a commercially available acid component such as Amberlyst 15 (Dow Chemical), etc. can be used, too.

In an embodiment, the acid treatment can be conducted by using the acid component in an amount of 0.1 to 10 moles, preferably 0.1 to 8 moles, and more preferably 0.1 to 5 moles, based on 1 mole of anhydrosugar alcohol, under nitrogen atmosphere at an elevated temperature (for example, 80°C to 200°C, or 90°C to 180°C), and then conducting pressure reduction under vacuum to remove moisture in the reactor, but it is not limited thereto.

The acid component is used in the above acid treatment to facilitate the ring opening of alkylene oxide in the addition reaction of alkylene oxide explained below.

In general, the reaction of adding alkylene oxide to alcohol proceeds under a base catalyst, but in case of anhydrosugar alcohol, due to structural characteristics, the rate of adding the alkylene oxide competes with the rate of opening and decomposition of the ring structure of anhydrosugar alcohol by the base catalyst. Accordingly, not only the anhydrosugar alcohol but also the decomposition product of the anhydrosugar alcohol reacts with the alkylene oxide, and the reaction product between the decomposition product of the anhydrosugar alcohol decomposed by the base catalyst and the alkylene oxide may act as a factor to lower product quality and storage stability. To the contrary, if anhydrosugar alcohol is first treated with an acid component and then subjected to addition reaction of alkylene oxide, the acid component facilitates the ring opening of the alkylene oxide without generating decomposition products of the anhydrosugar alcohol by the base catalyst, and thus anhydrosugar alcohol-alkylene oxide adduct can be easily produced by addition reaction of anhydrosugar alcohol and alkylene oxide. Therefore, when the acid-treated anhydrosugar alcohol and alkylene oxide are subjected to addition reaction, the conventional problems can be solved.

In an embodiment, the addition reaction of the acid-treated anhydrosugar alcohol and alkylene oxide can be conducted by slowly feeding alkylene oxide to the acid-treated anhydrosugar alcohol at an elevated temperature (for example, 100°C to 180°C, or 120°C to 160°C) during a time of, for example, 1 hour to 8 hours, or 2 hours to 4 hours, but it is not limited thereto. The reaction molar ratio of alkylene oxide to 1 mole of anhydrosugar alcohol may be, for example, 1 mole or more, or 2 moles or more, and 30 moles or less, 20 moles or less, 15 moles or less, or 12 moles or less, and for example, it may be 1 mole to 30 moles, preferably 2 to 20 moles, but it is not limited thereto.

In an embodiment, the further addition reaction of the product obtained by addition reaction of alkylene oxide with additional alkylene oxide can be conducted, for example, in high pressure reactor capable of being pressurized (for example, pressurized to 3MPa or higher) in the presence of base catalyst (for example, alkali metal hydroxide such as sodium hydroxide, potassium hydroxide, etc. or alkaline earth metal hydroxide such as calcium hydroxide, etc.) at an elevated temperature (for example, 100°C to 180°C, or 120°C to 160°C) during a time of, for example, 1 hour to 8 hours, or 2 hours to 4 hours, but it is not limited thereto. The reaction molar ratio of the alkylene oxide to 1 mole of anhydrosugar alcohol may be, for example, 1 mole or more, 2 moles or more, or 3 moles or more, and 30 moles or less, 20 moles or less, 15 moles or less, or 12 moles or less, and for example, it may be 1 mole to 30 moles, preferably 2 to 20 moles, more preferably 3 to 15 moles, but it is not limited thereto. Prior to feeding of the base catalyst, the acid component used in the treatment can be filtered and removed.

The product obtained by the addition reaction of the acid-treated anhydrosugar alcohol and alkylene oxide (i.e., a compound in a form where alkylene oxide is added to anhydrosugar alcohol) has a very stable structure, and thus even in the presence of base catalyst, the ring structure of the anhydrosugar alcohol is neither easily opened nor decomposed at high temperature. Therefore, it is very advantageous for further addition reaction of alkylene oxide. If it is continued to use the acid catalyst even during the further additional reaction of alkylene oxide, the acid catalyst helps to promote ring opening of alkylene oxide, but the reaction rate decreases as the number of moles of added alkylene oxide increases. That is, the rate of adding alkylene oxide and the rate of ring opening of the alkylene oxide itself compete, and at this time, the rate of adding alkylene oxide becomes slow, and the self-condensation reaction between the ring-opened alkylene oxides and the generation of byproduct proceed, which may cause deterioration of quality. Therefore, the further addition reaction of alkylene oxide is conducted under base catalyst.

Thereafter, the step of removing metal ions released from the used base catalyst may be conducted additionally, and for this, a metal ion adsorbent such as, for example, Ambosol MP20 (magnesium silicate component) may be used.

In an embodiment, example of the polyisocyanate may be aromatic polyisocyanate such as methylenediphenyl diisocyanate (MDI) (for example, 2,4- or 4,4'-methylenediphenyl diisocyanate), xylylene diisocyanate (XDI), m- or p-tetramethylxylylene diisocyanate (TMXDI) , toluene diisocyanate (TDI), di- or tetra-alkyldiphenylmethane diisocyanate, 3,3'-dimethyldiphenyl-4,4'-diisocyanate (TODI), phenylene diisocyanate (for example, 1,3-phenylene diisocyanate, 1,4-phenylene diisocyanate), naphthalene diisocyanate (NDI), or 4,4'-dibenzyl diisocyanate, etc.; aliphatic polyisocyanate such as hydrogenated MDI (H12MDI), 1-methyl-2,4-diisocyanatocyclohexane, 1,12-diisocyanatododecane, 1,6-diisocyanato-2,2,4-trimethylhexane, 1,6-diisocyanato-2,4,4-trimethylhexane, isophorone diisocyanate (IPDI), tetramethoxybutane-1,4-diisocyanate, butane-1,4-diisocyanate, hexamethylene diisocyanate (HDI) (for example, 1,6-hexamethylene diisocyanate), dimer fatty acid diisocyanate, dicyclohexylmethane diisocyanate, cyclohexane diisocyanate (for example, cyclohexane-1,4-diisocyanate) or ethylene diisocyanate, etc.; or a combination thereof, but it is not limited thereto.

In other embodiment, example of the polyisocyanate may be methylenediphenyl diisocyanate (MDI), ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-diisocyanate, cyclohexane-1,4-diisocyanate, isophorone diisocyanate, 2,4-hexahydrotoluene diisocyanate, 2,6-hexahydrotoluene diisocyanate, dicyclohexylmethane-4,4'-diisocyanate (HMDI), 1,3-phenylene diisocyanate, 1,4-phenylene diisocyanate, 2,4-toluene diisocyanate, 2,6-toluene diisocyanate, mixed toluene diisocyanate of 2,4-toluene diisocyanate and 2,6-toluene diisocyanate (2,4-/2,6-isomer ratio=80/20), diphenylmethane-2,4'-diisocyanate, diphenylmethane-4,4'-diisocyanate, polydiphenylmethane diisocyanate (PMDI), naphthalene-1,5-diisocyanate, or a combination thereof, but it is not limited thereto.

More concretely, the polyisocyanate may be methylenediphenyl diisocyanate (MDI), toluene diisocyanate (TDI), hexamethylene diisocyanate (HDI), isophorone diisocyanate (IPDI), or a combination thereof.

In an embodiment, example of the hydroxyalkyl (meth)acrylate may be a linear or branched alkyl acrylate having hydroxyl group, a linear or branched alkyl methacrylate having hydroxyl group, or a combination thereof, and more concretely, it may be a linear or branched C1-C8 alkyl acrylate having hydroxyl group, a linear or branched C1-C8 alkyl methacrylate having hydroxyl group, or a combination thereof, and still more concretely, it may be hydroxymethyl acrylate, hydroxymethyl methacrylate, hydroxyethyl acrylate, hydroxyethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, 2-hydroxyethylhexyl acrylate, 2-hydroxyethylhexyl methacrylate, 2-hydroxyethylbutyl acrylate, 2-hydroxyethylbutyl metacrylate, hydroxyoctyl acrylate, hydroxyoctyl methacrylate, or a combination thereof, and still more concretely, it may be 2-hydroxyethyl acrylate, 2-hydroxyethyl methacrylate, hydroxypropyl acrylate, hydroxypropyl methacrylate, hydroxybutyl acrylate, hydroxybutyl methacrylate, or a combination thereof, but it is not limited thereto.

In an embodiment, the (meth)acryl-modified polyurethane of the present invention may be represented by the following formula 2:

[Formula 2]

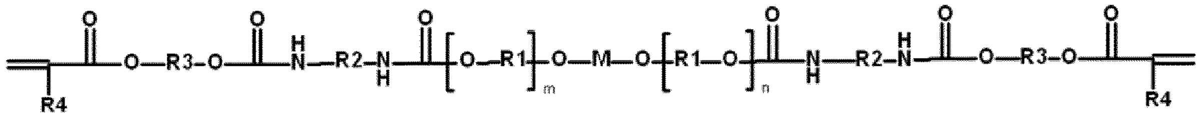

In the above formula 2,

each of R1 is independently an alkylene group, concretely it is a C2-C8 linear or C3-C8 branched alkylene group, and more concretely it is a C2-C6 linear or C3-C6 branched alkylene group,
each of R2 is independently an alkylene group, a cycloalkylene group, or an arylene group, and concretely it is a C2-C20 linear or C3-C20 branched alkylene group, a C3-C20 cycloalkylene group, or a C6-C20 arylene group,
each of R3 is independently an alkylene group, concretely it is a C1-C8 linear or C3-C8 branched alkylene group, and more concretely it is a C2-C6 linear or C3-C6 branched alkylene group,
each of R4 is independently a hydrogen atom or an alkyl group, and concretely it is a hydrogen atom or a C1-C4 linear or C3-C4 branched alkyl group,
M is a divalent organic group derived from anhydrosugar alcohol, concretely it is a divalent organic group derived from isosorbide, isomannide or isoidide, and more concretely it is selected from the following formulas:

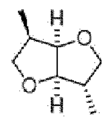 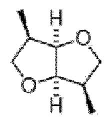 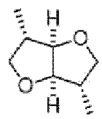

each of m and n independently represents an integer of 0 to 15,
m+n represents an integer of 1 to 30, more concretely an integer of 1 to 25, still more concretely an integer of 1 to 20, still more concretely an integer of 3 to 15, and still more concretely an integer of 5 to 15.

More concretely, the (meth)acryl-modified polyurethane of the present invention may be represented by any one of the following formulas, but it is not limited thereto:

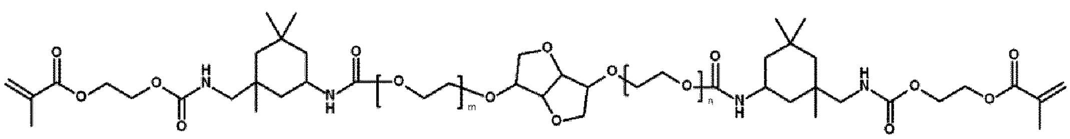

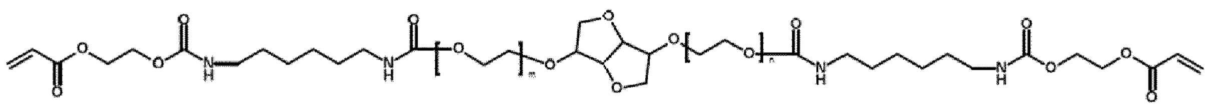

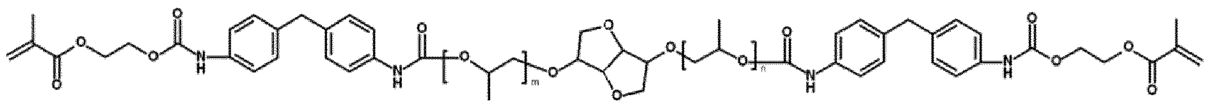

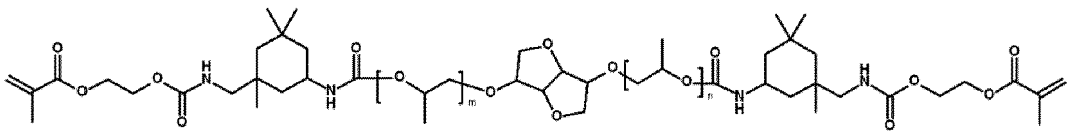

**In** the above formulas, each of m, n and m+n is independently the same as defined in the above formula 2.

The (meth)acryl-modified polyurethane can be obtained by reacting polyisocyanate to the anhydrosugar alcohol-alkylene oxide adduct and then reacting hydroxyalkyl (meth)acrylate thereto.

**In** an embodiment, the (meth)acryl-modified polyurethane can be prepared by a method comprising the steps of: (1) reacting anhydrosugar alcohol-alkylene oxide adduct and polyisocyanate to prepare intermediate having terminal isocyanate group; and (2) reacting the intermediate obtained in said step (1) and hydroxyalkyl (meth)acrylate.

According to an embodiment, the (meth)acryl-modified polyurethane can be prepared by reacting 2 equivalents of diisocyanate to 1 equivalent of anhydrosugar alcohol (e.g., isosorbide (ISB))-alkylene oxide adduct to prepare intermediate having terminal isocyanate group, and then reacting the terminal isocyanate group of the intermediate with 2 equivalents of hydroxyalkyl (meth)acrylate (e.g., 2-hydroxyethyl methacrylate).

In case of acryl-modified polyurethane prepared by using a general alkylene oxide (for example, ethylene oxide or polypropylene oxide, etc.) rather than the anhydrosugar alcohol-alkylene oxide adduct, the oil resistance of the coating formed from a composition comprising it is lowered (when polypropylene oxide is applied), or the adhesion of the coating formed from a composition comprising it is lowered (when ethylene oxide is applied).

According to an embodiment, the reaction of the anhydrosugar alcohol-alkylene oxide adduct and polyisocyanate may be conducted optionally in the presence of catalyst (for example, tin-based catalyst such as dibutyltin dilaurate (DBTDL)) at room temperature or an elevated temperature (for example, at 50 to 100°C, preferably at 50 to 70°C) during a proper time (for example, 0.1 to 5 hours, preferably 0.5 to 2 hours).

According to an embodiment, the reaction of the product of reacting anhydrosugar alcohol-alkylene oxide adduct and polyisocyanate (i.e., the intermediate obtained in the above step (1)) and hydroxyalkyl (meth)acrylate may be conducted optionally in the presence of catalyst (for example, tin-based catalyst such as dibutyltin dilaurate (DBTDL)) at an elevated temperature (for example, at 50 to 100°C, preferably at 50 to 70°C) during a proper time (for example, 0.1 to 5 hours, preferably 0.5 to 2 hours).

The coating composition for metal of the present invention comprises, based on total 100 parts by weight of the composition, 5.1 to 64.9 parts by weight of the (meth)acryl-modified polyurethane. If the amount of the (meth)acryl-modified polyurethane in 100 parts by weight of the composition is less than 5.1 parts by weight, the adhesion of the coating formed from a composition comprising it becomes poor and the oil resistance thereof becomes very poor, and to the contrary, if the amount is greater than 64.9 parts by weight, the adhesion of the coating formed from a composition comprising it becomes poor.

More concretely, the amount of the (meth)acryl-modified polyurethane in 100 parts by weight of the coating composition for metal of the present invention may be, for example, 5.1 parts by weight or more, 5.5 parts by weight or more, 6 parts by weight or more, 6.5 parts by weight or more, 7 parts by weight or more, 7.5 parts by weight or more, 8 parts by weight or more, 8.5 parts by weight or more, 9 parts by weight or more, 9.5 parts by weight or more, or 10 parts by weight or more, and it also may be 64.9 parts by weight or less, 64.5 parts by weight or less, 64 parts by weight or less, 63.5 parts by weight or less, 63 parts by weight or less, 62.5 parts by weight or less, 62 parts by weight or less, 61.5 parts by weight or less, 61 parts by weight or less, 60.5 parts by weight or less, or 60 parts by weight or less, but it is not limited thereto.

**[(Meth)acrylic monomer]**

The (meth)acrylic monomer comprised in the present coating composition for metal is capable of adjusting the viscosity of the coating composition for metal so as to improve its workability such as applicability on metal, etc., increasing the thermal curing rate of the coating composition for metal, and enhancing the strength of the cured product so as to improve its adhesion.

The (meth)acrylic monomer contained in the present coating composition for metal may be a monomer having (meth)acrylic group in the molecule, and preferably, it may be a monomer having 1 to 6 (concretely, 1 to 4) (meth)acrylic groups in the molecule, or a mixture of two or more thereof.

In an embodiment, as the (meth)acrylic monomer, a monomer having 1 (meth)acrylic group may be, for example, (meth)acrylic acid, lauryl (meth)acrylate, stearyl (meth)acrylate, ethylcarbitol (meth)acrylate, tetrahydrofurfuryl (meth)acrylate, caprolactone-modified tetrahydrofurfuryl (meth)acrylate, cyclohexyl (meth)acrylate, dicyclopentanyl (meth)acrylate, isobornyl (meth)acrylate, benzyl (meth)acrylate, phenyl (meth)acrylate, phenoxyethyl (meth)acrylate , phenoxydiethyleneglycol (meth) acrylate, phenoxytetraethyleneglycol (meth)acrylate, nonylphenoxyethyl (meth)acrylate, nonylphenoxytetraethyleneglycol (meth)acrylate, methoxydiethyleneglycol (meth)acrylate, ethoxydiethyleneglycol (meth)acrylate, butoxyethyl (meth)acrylate, butoxytriethyleneglycol (meth)acrylate, 2-ethylhexylpolyethyleneglycol (meth)acrylate, nonylphenylpolypropyleneglycol (meth)acrylate, methoxydipropyleneglycol (meth)acrylate, glycidyl (meth)acrylate, 2-hydroxyethyl (meth)acrylate, 2-hydroxypropyl (meth)acrylate, glycerol (meth)acrylate, polyethyleneglycol (meth) acrylate, polypropyleneglycol (meth)acrylate, epichlorohydrin (hereinafter abbreviated as ECH)-modified butyl (meth) acrylate, ECH-modified phenoxy (meth)acrylate, ethylene oxide (hereinafter abbreviated as EO)-modified phthalic acid (meth)acrylate, EO-modified succinic acid (meth)acrylate, caprolactone-modified 2-hydroxyethyl (meth)acrylate, N,N-dimethylaminoethyl (meth)acrylate, N,N-diethylaminoethyl (meth)acrylate, (2-methyl-2-ethyl-1,3-dioxolan-4-yl)methyl (meth)acrylate, or a mixture thereof, but it is not limited thereto.

In other embodiment, as the (meth)acrylic monomer, a monomer having 2 or more (meth)acrylic groups may be, for example, 1,6-hexanediol diacrylate (HDDA), 1,4-butanediol diacrylate (BDDA), tripropyleneglycol diacrylate (TPGDA), bisphenol A [EO]4~30 diacrylate (BPA[EO]4~30DA, EO is ethylene oxide unit), trimethylolpropane triacrylate (TMPTA), trimethylolpropane [EO]3~15 triacrylate (TMP[EO]3~15TA, EO is ethylene oxide unit), pentaerythritol triacrylate (PETA), pentaerythritol tetraacrylate (PETTA), ditrimethylolpropane tetraacrylate (DTMPTTA), dipentaerylthritol pentaacrylate (DPPA), dipentaerythritol hexaacrylate (DPHA), or a mixture thereof, but it is not limited thereto.

The coating composition for metal of the present invention comprises, based on total 100 parts by weight of the composition, 7.1 to 74.9 parts by weight of the (meth)acrylic monomer. If the amount of the (meth)acrylic monomer in 100 parts by weight of the composition is less than 7.1 parts by weight, the adhesion of the coating formed from a composition comprising it becomes very poor and the oil resistance thereof becomes poor, and to the contrary, if the amount is greater than 74.9 parts by weight, the oil resistance of the coating formed from a composition comprising it becomes very poor.

More concretely, the amount of the (meth)acrylic monomer in 100 parts by weight of the coating composition for metal of the present invention may be, for example, 7.1 parts by weight or more, 7.5 parts by weight or more, 8 parts by weight or more, 8.5 parts by weight or more, 9 parts by weight or more, 9.5 parts by weight or more, or 10 parts by weight or more, and it also may be 74.9 parts by weight or less, 74.5 parts by weight or less, 74 parts by weight or less, 73.5 parts by weight or less, 73 parts by weight or less, 72.5 parts by weight or less, 72 parts by weight or less, 71.5 parts by weight or less, 71 parts by weight or less, 70.5 parts by weight or less, or 70 parts by weight or less, but it is not limited thereto.

**[Epoxy resin]**

The epoxy resin comprised in the present coating composition for metal is used to enhance the strength of the cured product of the coating composition for metal and so improve its adhesion.

The epoxy resin is a resin having epoxy group in the molecule, and preferably, it may be a resin having 2 or more epoxy groups in the molecule, or a mixture of two or more thereof.

In an embodiment, the epoxy resin may be, for example, bisphenol-based epoxy resin, phenol novolac-based epoxy resin, o-cresol novolac-based epoxy resin, multifunctional epoxy resin, amine-based epoxy resin, heterocycle-containing epoxy resin, substituted epoxy resin, naphthol-based epoxy resin, or a mixture thereof, but it is not limited thereto.

The coating composition for metal of the present invention comprises, based on total 100 parts by weight of the composition, 2.1 to 44.9 parts by weight of the epoxy resin. If the amount of the epoxy resin in 100 parts by weight of the composition is less than 2.1 parts by weight, the adhesion of the coating formed from a composition comprising it becomes poor, and to the contrary, if the amount is greater than 44.9 parts by weight, the adhesion and oil resistance of the coating formed from a composition comprising it become poor.

More concretely, the amount of the epoxy resin in 100 parts by weight of the coating composition for metal of the present invention may be, for example, 2.1 parts by weight or more, 2.5 parts by weight or more, 3 parts by weight or more, 3.5 parts by weight or more, 4 parts by weight or more, 4.5 parts by weight or more, or 5 parts by weight or more, and it also may be 44.9 parts by weight or less, 44.5 parts by weight or less, 44 parts by weight or less, 43.5 parts by weight or less, 43 parts by weight or less, 42.5 parts by weight or less, 42 parts by weight or less, 41.5 parts by weight or less, 41 parts by weight or less, 40.5 parts by weight or less, 40 parts by weight or less, or 39 parts by weight or less, but it is not limited thereto.

**[Epoxy curing promotor]**

The epoxy curing promotor comprised in the present coating composition for metal is used to increase the curing rate of the epoxy resin.

In an embodiment, the epoxy curing promotor may be, for example, substituted imidazole (e.g., 1-methylimidazole, 2-methylimidazole, 2-ethyl-4-methylimidazole, 2-phenylimidazole, 1-cyanoethylimidazole), imidazoline (e.g., 2-phenylimidazoline), tertiary amine (e.g., N,N-dimethylbenzylamine), 2,4,6-tris(dimethylaminomethyl)phenol (DMP30), bisphenol A, bisphenol F, nonylphenol, p-tert-butylphenol, novolac type phenolic resin, salicylic acid, p-toluenesulfonic acid, 1,4-diazabicyclo[2.2.2]octane (DABCO), 1,8-diazabicyclo[5.4.0]undec-7-ene (DBU), S-triazine (e.g., Lupragen N600), bis(2-dimethylaminoethyl) ether (e.g., Lupragen N206), pentamethyldiethylenetriamine (e.g., Lupragen N301),

trimethylaminoethylethanolamine (e.g., Lupragen N400), tetramethyl-1,6-hexanediamine (e.g., Lupragen N500), aminoethylmorpholine, aminopropylmorpholine, aminoethylethyleneurea, ketimine (e.g., Epi-Kure 3502) (reaction product of ethylene diamine and methyl isobutyl ketone), uron (e.g., 3-(4-chlorophenyl)-1,1-dimethylurea (monuron), 3-(3,4-dichlorophenyl)-1,1-dimethylurea (diuron), 3-phenyl-1,1-dimethylurea (phenuron) and 3-(3-chloro-4-methylphenyl)-1,1-dimethylurea (chlorotolurone)), tolyl-2,4-bis-N,N-dimethylcarbamide (e.g., Amicure UR2T), dicyandiamide (DICY), Mannich base or secondary amine (e.g., dialkylamine such as di(2-ethylhexyl)amine, dibutylamine, dipropylamine, ditridecylamine), N,N'-diisopropylisophoronediamine (e.g., Jefflink® XTJ-584), N,N'-di isobutyl-4,4'-diaminodicyclohexylmethane (e.g., Clearlink 1000), N-(hydroxyethyl)aniline, and di(2-methoxyethyl)amine, or a combination thereof, but it is not limited thereto.

The coating composition for metal of the present invention comprises, based on total 100 parts by weight of the composition, 0.051 to 2.49 parts by weight of the epoxy curing promotor. If the amount of the epoxy curing promotor in 100 parts by weight of the composition is less than 0.051 part by weight, a composition comprising it is not cured and so a coating is not formed therefrom, and to the contrary, if the amount is greater than 2.49 parts by weight, the adhesion and oil resistance of the coating formed from a composition comprising it become very poor.

More concretely, the amount of the epoxy curing promotor in 100 parts by weight of the coating composition for metal of the present invention may be, for example, 0.051 part by weight or more, 0.055 part by weight or more, 0.06 part by weight or more, 0.065 part by weight or more, 0.07 part by weight or more, 0.075 part by weight or more, 0.08 part by weight or more, 0.085 part by weight or more, 0.09 part by weight or more, 0.095 part by weight or more, or 0.1 part by weight or more, and it also may be 2.49 parts by weight or less, 2.45 parts by weight or less, 2.4 parts by weight or less, 2.35 parts by weight or less, 2.3 parts by weight or less, 2.25 parts by weight or less, 2.2 parts by weight or less, 2.15 parts by weight or less, 2.1 parts by weight or less, 2.05 parts by weight or less, 2 parts by weight or less, 1.5 parts by weight or less, or 1 part by weight or less, but it is not limited thereto.

**[Thermal polymerization initiator]**

The thermal polymerization initiator comprised in the present coating composition for metal is used to initiate the polymerization of the (meth)acrylic monomer and the (meth)acryl-modified polyurethane and thus promote the curing.

In an embodiment, the thermal polymerization initiator may be selected from compounds represented by the following formula 3-1, compounds represented by the following formula 3-2, or mixtures thereof:

[Formula 3-1]

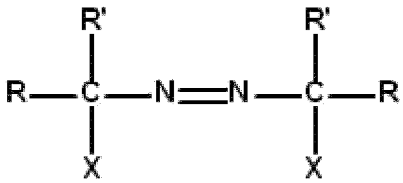

in the above formula 3-1,

each of R and R' is independently C2-C8 linear or C3-C8 branched alkyl group; C3-C20 cycloalkyl group; C6-C20 aryl group; or a C2-C8 linear or C3-C8 branched methoxy-alkyl group,

X is -CN or $-CO_2R''$, where R'' is C2-C8 linear or C3-C8 branched alkyl group; C3-C20 cycloalkyl group; or C6-C20 aryl group,

[Formula 3-2]

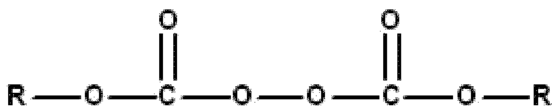

in the above formula 3-2,

each of R is independently C2-C8 linear or C3-C8 branched alkyl group; C3-C20 cycloalkyl group; or C6-C20 aryl group.

The coating composition for metal of the present invention comprises, based on total 100 parts by weight of the composition, 0.00051 to 2.49 parts by weight of the thermal polymerization initiator. If the amount of the thermal polymerization initiator in 100 parts by weight of the composition is less than 0.00051 part by weight, a composition comprising it is not cured and so a coating is not formed therefrom, and to the contrary, if the amount is greater than 2.49 parts by weight, the adhesion and oil resistance of the coating formed from a composition comprising it become very poor.

More concretely, the amount of the thermal polymerization initiator in 100 parts by weight of the coating composition for metal of the present invention may be, for example, 0.00051 part by weight or more, 0.00055 part by weight or more, 0.0006 part by weight or more, 0.00065 part by weight or more, 0.0007 part by weight or more, 0.00075 part by weight or more, 0.0008 part by weight or more, 0.00085 part by weight or more, 0.0009 part by weight or more, 0.00095 part by weight or more, 0.001 part by weight or more, 0.005 part by weight or more, or 0.01 part by weight or more, and it also may be 2.49 parts by weight or less, 2.45 parts by weight or less, 2.4 parts by weight or less, 2.35 parts by weight or less, 2.3 parts by weight or less, 2.25 parts by weight or less, 2.2 parts by weight or less, 2.15 parts by weight or less, 2.1 parts by weight or less, 2.05 parts by weight or less, 2 parts by weight or less, 1.5 parts by weight or less, 1 part by weight or less, or 0.5 part by weight or less, but it is not limited thereto.

In addition to the components explained above, the coating composition for metal of the present invention can further comprise additive(s) that can be used conventionally in paint compositions for metal.

**[Method for preparing a coating composition for metal]**

In other aspect, the present invention provides a method for preparing a coating composition for metal, comprising the step of mixing, based on total 100 parts by weight of the mixture, 5.1 to 64.9 parts by weight of (meth) acryl-modified polyurethane; 7.1 to 74.9 parts by weight of (meth)acrylic monomer; 2.1 to 44.9 parts by weight of epoxy resin; 0.051 to 2.49 parts by weight of epoxy curing promotor; and 0.00051 to 2.49 parts by weight of thermal polymerization initiator, wherein the (meth)acryl-modified polyurethane comprises i) polymerized units derived from anhydrosugar alcohol-alkylene oxide adduct; ii) polymerized units derived from polyisocyanate; and iii) polymerized units derived from hydroxyalkyl (meth)acrylate.

In the method for preparing a coating composition for metal of the present invention, the concrete kinds and use amounts of the (meth)acryl-modified polyurethane, (meth)acrylic monomer, epoxy resin, epoxy curing promotor and thermal polymerization initiator are the same as explained above.

In a preferable embodiment, the mixing of the (meth)acryl-modified polyurethane, (meth)acrylic monomer, epoxy resin, epoxy curing promotor and thermal polymerization initiator can be conducted under temperature condition of 60°C or lower (e.g., 10 to 60°C, and more concretely, 20 to 60°C). If the temperature condition for mixing of the components is too higher than 60°C, polymerization reaction of the (meth)acrylic monomer may proceed during the mixing and curing may occur during preparation of the composition, and thus it may be difficult to use the resulting product as a coating composition.

**[Coated metallic article]**

In another aspect, the present invention provides a coated metallic article comprising a metallic article; and a coating layer of the coating composition for metal of the present invention on the surface of the metallic article.

In an embodiment, the metallic article may be a mechanical part, electric part or electronic part, but it is not limited thereto.

There is no special limitation to the method for forming a coating layer of the coating composition for metal of the present invention on the metallic article, and it can be conducted by using a conventional coating method and device.

The present invention is explained in more detail through the following Examples and Comparative Examples. However, the scope of the present invention is not limited thereby in any manner.

**EXAMPLES**

**<Preparation of anhydrosugar alcohol-alkylene oxide adduct>**

**Preparation Example A1: Preparation of isosorbide-ethylene oxide 5 mole adduct**

146g of isosorbide and 0.15g of phosphoric acid (85%) as an acid component were put into a reactor that could be pressurized, and the inside of the reactor was substituted with nitrogen and heated up to 100°C and the moisture in the reactor was removed by pressure reduction under vacuum. Then, while firstly adding 88g of ethylene oxide slowly thereto, the reaction was conducted at 100 to 140°C for 2 to 3 hours. At that time, the reaction temperature was controlled so as not to exceed 140°C. Thereafter, the inside of the reactor was cooled to 50°C, and then 0.3g of potassium hydroxide was

added to the reactor, the inside of the reactor was substituted with nitrogen and heated up to 100°C and the moisture in the reactor was removed by pressure reduction under vacuum. Then, while secondly adding 132g of ethylene oxide slowly thereto, the reaction was conducted at 100 to 140°C for 2 to 3 hours. After completing the reaction, the inside of the reactor was cooled to 50°C, 4.0g of Ambosol MP20 as adsorbent was added thereto, and the inside of the reactor was reheated and agitated at 100°C to 120°C for 1 to 5 hours to remove residual metal ions (at that time, the inside of the reactor was substituted with nitrogen and/or pressure reduction under vacuum was carried out). After confirming that no metal ions were detected, the inside of the reactor was cooled to 60°C to 90°C and the remaining byproduct was removed to obtain 362g of isosorbide-ethylene oxide 5 mole adduct in transparent liquid form.

**Preparation Example A2: Preparation of isosorbide-ethylene oxide 10 mole adduct**

Excepting that the secondly added amount of ethylene oxide was changed from 132g to 352g, the same method as Preparation Example A1 was conducted to obtain 551g of isosorbide-ethylene oxide 10 mole adduct in transparent liquid form.

**Preparation Example A3: Preparation of isosorbide-propylene oxide 5 mole adduct**

As the raw material for the addition reaction, propylene oxide was used instead of ethylene oxide. Concretely, excepting that 116g of propylene oxide was firstly added instead of 88g of ethylene oxide and 174g of propylene oxide was secondly added instead of 132g of ethylene oxide, the same method as Preparation Example A1 was conducted to obtain 423g of isosorbide-propylene oxide 5 mole adduct in transparent liquid form.

**Preparation Example A4: Preparation of isosorbide-propylene oxide 10 mole adduct**

As the raw material for the addition reaction, propylene oxide was used instead of ethylene oxide. Concretely, excepting that 116g of propylene oxide was firstly added instead of 88g of ethylene oxide and 465g of propylene oxide was secondly added instead of 132g of ethylene oxide, the same method as Preparation Example A1 was conducted to obtain 698g of isosorbide-propylene oxide 10 mole adduct in transparent liquid form.

**<Preparation of (meth)acryl-modified polyurethane>**

**Preparation Example B1: Preparation of (meth)acryl-modified polyurethane by using isosorbide-ethylene oxide 5 mole adduct as polyol, isophorone diisocyanate (IPDI) as polyisocyanate and 2-hydroxyethyl methacrylate as hydroxyalkyl (meth)acrylate**

Into a 3-necked glass reactor equipped with an agitator, 222g of isophorone diisocyanate (IPDI) and 0.1g of dibutyltin dilaurate (DBTDL) as reaction catalyst were fed. While agitating the mixture at room temperature, 183g of the isosorbide-ethylene oxide 5 mole adduct prepared in Preparation Example A1 was added slowly thereto and the crosslinking reaction was conducted. After completing addition of the isosorbide-ethylene oxide 5 mole adduct, the mixture was agitated at 50°C for 1 hour for aging, and 65g of 2-hydroxyethyl methacrylate was added slowly thereto and the acryl modification reaction was conducted. After completing addition of 2-hydroxyethyl methacrylate, the mixture was agitated at 50°C for 1 hour for aging, and the reaction product was cooled to room temperature to obtain 467g of (meth) acryl-modified polyurethane of the following formula A.

[Formula A]

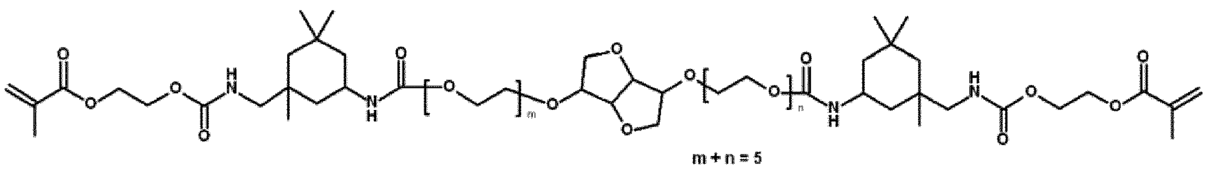

m + n = 5

**Preparation Example B2: Preparation of (meth)acryl-modified polyurethane by using isosorbide-ethylene oxide 10 mole adduct as polyol, hexamethylene diisocyanate (HDI) as polyisocyanate and 2-hydroxyethyl acrylate as hydroxyalkyl (meth)acrylate**

Excepting that 168g of hexamethylene diisocyanate (HDI) was used instead of isophorone diisocyanate (IPDI)

as polyisocyanate, 293g of the isosorbide-ethylene oxide 10 mole adduct prepared in Preparation Example A2 was used instead of the isosorbide-ethylene oxide 5 mole adduct prepared in Preparation Example A1 as polyol and 58g of 2-hydroxyethyl acrylate was used instead of 2-hydroxyethyl methacrylate as hydroxyalkyl (meth)acrylate, the same method as Preparation Example B1 was conducted to obtain 515g of (meth)acryl-modified polyurethane of the following formula B.

[Formula B]

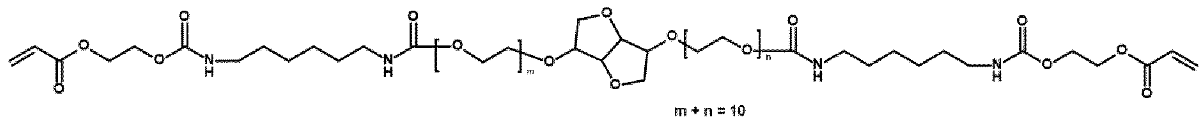

m + n = 10

**Preparation Example B3: Preparation of (meth)acryl-modified polyurethane by using isosorbide-propylene oxide 5 mole adduct as polyol, methylenediphenyl diisocyanate (MDI) as polyisocyanate and 2-hydroxyethyl methacrylate as hydroxyalkyl (meth)acrylate**

Excepting that 250g of methylenediphenyl diisocyanate (MDI) was used instead of isophorone diisocyanate (IPDI) as polyisocyanate and 218g of the isosorbide-propylene oxide 5 mole adduct prepared in Preparation Example A3 was used instead of the isosorbide-ethylene oxide 5 mole adduct prepared in Preparation Example A1 as polyol, the same method as Preparation Example B1 was conducted to obtain 529g of (meth)acryl-modified polyurethane of the following formula C.

[Formula C]

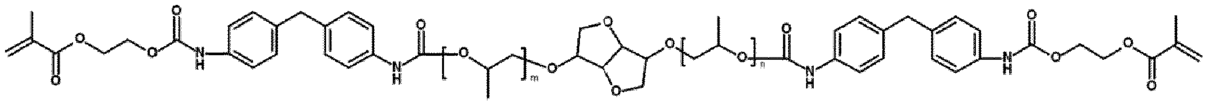

m + n = 5

**Preparation Example B4: Preparation of (meth)acryl-modified polyurethane by using isosorbide-propylene oxide 10 mole adduct as polyol, isophorone diisocyanate (IPDI) as polyisocyanate and 2-hydroxyethyl methacrylate as hydroxyalkyl (meth)acrylate**

Excepting that 363g of the isosorbide-propylene oxide 10 mole adduct prepared in Preparation Example A4 was used instead of the isosorbide-ethylene oxide 5 mole adduct prepared in Preparation Example A1 as polyol, the same method as Preparation Example B1 was conducted to obtain 643g of (meth)acryl-modified polyurethane of the following formula D.

[Formula D]

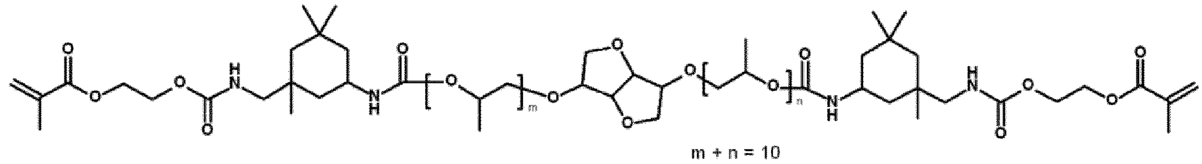

m + n = 10

**Preparation Example B5: Preparation of (meth)acryl-modified polyurethane by using isosorbide as polyol, isophorone diisocyanate (IPDI) as polyisocyanate and 2-hydroxyethyl methacrylate as hydroxyalkyl (meth)acrylate**

Excepting that 146g of isosorbide was used instead of the isosorbide-ethylene oxide 5 mole adduct prepared in Preparation Example A1 as polyol, the same method as Preparation Example B1 was conducted to obtain 431g of (meth) acryl-modified polyurethane of the following formula E.

[Formula E]

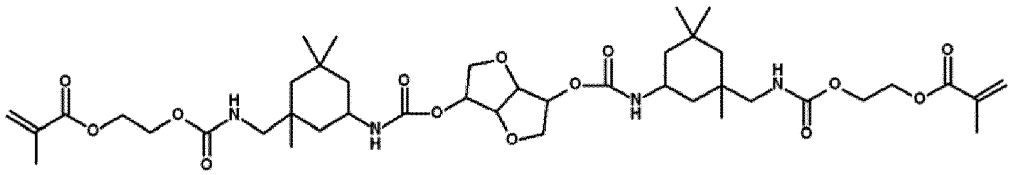

**Preparation Example B6: Preparation of (meth)acryl-modified polyurethane by using polyethylene glycol (number average molecular weight: 500 g/mol) as polyol, isophorone diisocyanate (IPDI) as polyisocyanate and 2-hydroxyethyl methacrylate as hydroxyalkyl (meth)acrylate**

Excepting that 500g of polyethylene glycol (number average molecular weight: 500 g/mol) was used instead of the isosorbide-ethylene oxide 5 mole adduct prepared in Preparation Example A1 as polyol, the same method as Preparation Example B1 was conducted to obtain 782g of (meth)acryl-modified polyurethane of the following formula F.

[Formula F]

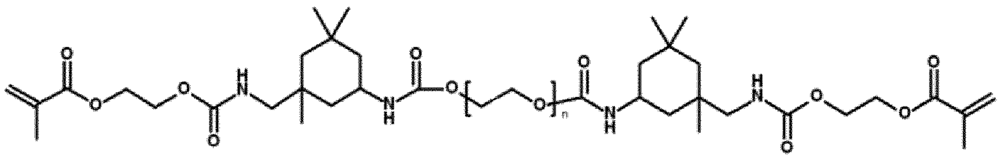

**Preparation Example B7: Preparation of (meth)acryl-modified polyurethane by using polypropylene glycol (number average molecular weight: 500 g/mol) as polyol, hexamethylene diisocyanate (HDI) as polyisocyanate and 2-hydroxyethyl acrylate as hydroxyalkyl (meth)acrylate**

Excepting that 168g of hexamethylene diisocyanate (HDI) was used instead of isophorone diisocyanate (IPDI) as polyisocyanate, 500g of polypropylene glycol (number average molecular weight: 500 g/mol, Kumho Petrochemical) was used instead of the isosorbide-ethylene oxide 5 mole adduct prepared in Preparation Example A1 as polyol and 58g of 2-hydroxyethyl acrylate was used instead of 2-hydroxyethyl methacrylate as hydroxyalkyl (meth)acrylate, the same method as Preparation Example B1 was conducted to obtain 720g of (meth)acryl-modified polyurethane of the following formula G.

[Formula G]

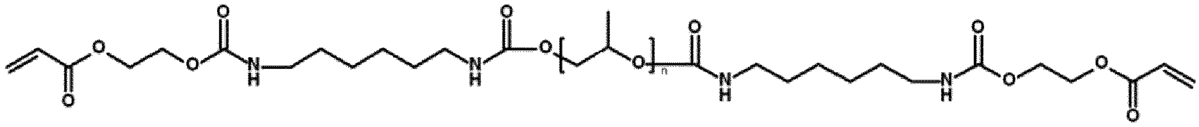

**Preparation Example B8: Preparation of (meth)acryl-modified polyurethane by using polytetramethylene glycol (number average molecular weight: 1,000 g/mol) as polyol, methylenediphenyl diisocyanate (MDI) as polyisocyanate and 2-hydroxyethyl methacrylate as hydroxyalkyl (meth)acrylate**

Excepting that 250g of methylenediphenyl diisocyanate (MDI) was used instead of isophorone diisocyanate (IPDI) as polyisocyanate and 1,000g of polytetramethylene glycol (number average molecular weight: 1,000 g/mol, Aldrich) was used instead of the isosorbide-ethylene oxide 5 mole adduct prepared in Preparation Example A1 as polyol, the same method as Preparation Example B1 was conducted to obtain 1,308g of (meth)acryl-modified polyurethane of the following formula H.

[Formula H]

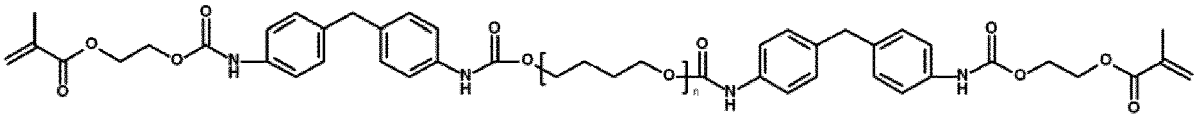

**<Preparation of coating composition with oil resistance for metal>**

**Examples A1 to A4 and Comparative Examples A1 to A14: Standard preparation method**

In a mixing reactor maintained at 60°C or lower, the (meth)acryl-modified polyurethane, (meth)acrylic monomer, epoxy resin, epoxy curing promotor and thermal polymerization initiator were fed with the weight ratio shown in the following Table 1, and were mixed by agitation at a temperature of 60°C or lower to prepare a liquid coating composition with oil resistance for metal. At that time, the sum of the amounts of the (meth)acryl-modified polyurethane, (meth)acrylic monomer, epoxy resin, epoxy curing promotor and thermal polymerization initiator was 100 parts by weight in total.

<Explanation of the components>

(1) (Meth)acryl-modified polyurethane (acryl-modified PU)

- Preparation Example B1: (meth)acryl-modified polyurethane of formula A obtained in Preparation Example B1
- Preparation Example B2: (meth)acryl-modified polyurethane of formula B obtained in Preparation Example B2
- Preparation Example B3: (meth)acryl-modified polyurethane of formula C obtained in Preparation Example B3
- Preparation Example B4: (meth)acryl-modified polyurethane of formula D obtained in Preparation Example B4
- Preparation Example B5: (meth)acryl-modified polyurethane of formula E obtained in Preparation Example B5
- Preparation Example B6: (meth)acryl-modified polyurethane of formula F obtained in Preparation Example B6
- Preparation Example B7: (meth)acryl-modified polyurethane of formula G obtained in Preparation Example B7
- Preparation Example B8: (meth)acryl-modified polyurethane of formula H obtained in Preparation Example B8

(2) (Meth)acrylic monomer

- 2-HEMA: 2-hydroxyethyl methacrylate (Samchun Pure Chemical)
- 4-HBA: 4-hydroxybutyl acrylate (Samchun Pure Chemical)
- BA: butyl acrylate (Samchun Pure Chemical)
- PETTA: pentaerythritol tetraacrylate (Miwon Commercial)
- P-2M: 2-methacryloyloxyethyl acid phosphate (Kyoei Chemical)
- BDDA: 1,4-butanediol diacrylate (Aldrich)

(3) Epoxy resin

- YD-128: bisphenol A-based epoxy resin (Kukdo Chemical)
- YDF-170: bisphenol F-based epoxy resin (Kukdo Chemical)
- 1,4-BDGE: 1,4-butanediol diglycidyl ether (Kukdo Chemical)

(4) Epoxy curing promotor

- DICY: Dicyandiamide (Evonik)
- UR2T: 1,1'-(4 methyl-m-phenylene)bis(3,3 dimethylurea) (Evonik)

(5) Thermal polymerization initiator

- V-65: 2,2' -azobis(2,4-dimethylvaleronitrile) (Fuji Film)
- V-40: 1,1'-azobis(cyclohexane-1-carbonitrile) (Fuji Film)
- Peroyl TCP: bis(4-t-butylcyclohexyl)peroxydicarbonate (Nichiyu)

[Table 1]

| Components | Example | | | |
|---|---|---|---|---|
| | A1 | A2 | A3 | A4 |
| Acryl-modified PU (pbw) | Prep. Ex. B1(50) | Prep. Ex. B2(10) | Prep. Ex. B3(60) | Prep. Ex. B4(50) |
| (Meth)acrylic monomer (pbw) | 2-HEMA(35) PETTA(2) | BA(65) P-2M(5) | 4-HBA(34) | 2-HEMA(9) P-2M(1) |
| Epoxy resin (pbw) | YD-128 (11) | YDF-170 (19) | 1,4-BDGE (5) | YD-128 (39) |
| Epoxy curing promotor (pbw) | DICY (1) | UR2T (0.5) | DICY (0.95) | DICY (0.9) |
| Thermal polymerization initiator (pbw) | V-65 (1) | V-40 (0.5) | Peroyl TCP (0.05) | V-65 (0.1) |
| (pbw: parts by weight; Prep. Ex.: Preparation Example) | | | | |

[Table 1] (continued)

| Components | Comparative Example | | | | | |
|---|---|---|---|---|---|---|
| | A1 | A2 | A3 | A4 | A5 | A6 |
| Acryl-modified PU (pbw) | Prep. Ex. B5(50) | Prep. Ex. B6(60) | Prep. Ex. B7(50) | Prep. Ex. B8(45) | Prep. Ex. B1(5) | Prep. Ex. B2(65) |
| (Meth)acrylic monomer (pbw) | 2-HEMA(30) P-2M(5) | BA(21) PETTA(3) | 4-HBA(34) BDDA(1.5) | 2-HEMA(37) P-2M(2) | 2-HEMA(81) PETTA(2) | BA(22) PETTA(2) |
| Epoxy resin (pbw) | YD-128 (14) | 1,4-BDGE (15) | YD-128 (14) | YD-128 (15) | YD-128 (11) | 1,4-BDGE (10) |
| Epoxy curing promotor (pbw) | DICY (0.5) | DICY (0.5) | DICY (0.49) | DICY (0.99) | DICY (0.99) | DICY (0.5) |
| Thermal polymerization initiator (pbw) | V-40 (0.5) | Peroyl TCP (0.5) | V-40 (0.01) | V-65 (0.01) | V-40 (0.01) | V-40 (0.5) |
| (pbw: parts by weight; Prep. Ex.: Preparation Example) | | | | | | |

[Table 1] (continued)

| Components | Comparative Example | | | | | | | |
|---|---|---|---|---|---|---|---|---|
| | A7 | A8 | A9 | A10 | A11 | A12 | A13 | A14 |
| Acryl-modified PU (pbw) | Prep. Ex. B3(60) | Prep. Ex. B4(10) | Prep. Ex. B1(45) | Prep. Ex. B1(30) | Prep. Ex. B1(50) | Prep. Ex. B4(45) | Prep. Ex. B1(45) | Prep. Ex. B1(50) |
| (Meth)acrylic monomer (pbw) | 2-HEMA(5) P-2M(2) | 2-HEMA(70) PETTA(5) | 2-HEMA(50) P-2M(2) | 4-HBA(21) BDDA(3) | 2-HEMA(35) PETTA(2) | 2-HEMA(22) P-2M(1) | 2-HEMA(37) P-2M(2) | 2-HEMA(35) |
| Epoxy resin (pbw) | YDF-170 (32) | YD-128 (14) | YD-128 (2) | YD-128 (45) | YD-128 (11) | YD-128 (29) | YD-128 (15) | YD-128 (11) |
| Epoxy curing promotor (pbw) | DICY (0.99) | DICY (0.5) | DICY (0.1) | DICY (0.99) | DICY (0.05) | DICY (2.5) | DICY (0.9995) | DICY (1.5) |
| Thermal polymerization initiator (pbw) | V-65 (0.01) | Peroyl TCP (0.5) | Peroyl TCP (0.9) | V-65 (0.01) | V-65 (1.95) | V-65 (0.5) | V-6 (0.0005) | V-65 (2.5) |
| (pbw: parts by weight; Prep. Ex.: Preparation Example | | | | | | | | |

**<Evaluation of properties of the coating composition with oil resistance for metal>**

The coating composition with oil resistance for metal prepared in each of Examples A1 to A4 and Comparative Examples A1 to A14 was applied with an area of 2.5cm x 2.0cm on each surface of two rolled steel sheets cut into 2.5cm x 12cm size, and then the applied parts of the two rolled steel sheets were overlapped and fixed, and cured by heat at 150°C for 5 minutes to prepare a metal adhesion sample. For each of the samples, the adhesion and oil resistance were evaluated according to the following methods, and the results are shown in the following Table 2.

**<Methods of evaluating the properties >**

(1) Adhesion

In order to evaluate the adhesion to metal of the metal coating composition, the lap shear strength (MPa) of the metal adhesion sample was measured by using UTM (Instron 5967, Instron). Concretely, for each metal adhesion sample, the shear strength was measured 5 times in total, and the average value thereof was calculated. Higher shear strength means better adhesion.

(2) Oil resistance

The metal adhesion sample was immersed in mineral oil (Daejung Chemical) and heated at 190°C for 200 hours, and then for each metal adhesion sample, the shear strength was measured 5 times according to the adhesion measurement method explained in the above (1), and the average value thereof was calculated. Thereafter, for each metal adhesion sample, the reduction ratio (%) of shear strength after immersion to shear strength before immersion was calculated. Lower reduction ratio of shear strength means better oil resistance.

Shear strength reduction ratio (%) = (Shear strength before immersion - Shear strength after immersion) x 100 / Shear strength before immersion

[Table 2]

| | | Adhesion (shear strength (MPa)) | Oil resistance (shear strength reduction ratio (%)) |
|---|---|---|---|
| Example | A1 | 17.8 | 21 |
| | A2 | 16.5 | 28 |
| | A3 | 18.0 | 23 |
| | A4 | 17.4 | 24 |
| Comparative Example | A1 | 13.8 | 22 |
| | A2 | 12.4 | 28 |
| | A3 | 16.2 | 72 |
| | A4 | 18.1 | Spontaneously peeled off after heating was finished |
| | A5 | 11.9 | Spontaneously peeled off after heating was finished |
| | A6 | 14.3 | 22 |
| | A7 | 10.5 | 31 |
| | A8 | 16.9 | Spontaneously peeled off after heating was finished |
| | A9 | 13.1 | 25 |
| | A10 | 12.9 | 32 |
| | A11 | Not cured | |
| | A12 | 8.3 | Spontaneously peeled off after heating was finished |
| | A13 | Not cured | |

(continued)

| | | Adhesion (shear strength (MPa)) | Oil resistance (shear strength reduction ratio (%)) |
|---|---|---|---|
| | A14 | 4.5 | Spontaneously peeled off after heating was finished |

As shown in Table 2 above, in case of the metal adhesion samples of Examples A1 to A4 for which the coating compositions comprising the (meth)acryl-modified polyurethane according to the present invention were applied, the adhesion to metal was excellent so as to show a shear strength of 16 MPa or higher, and the adhesion was maintained well so as to show a shear strength reduction ratio of less than 30% even after immersion in mineral oil at 190°C for 200 hours, and thus the oil resistance was also excellent.

However, in case of the metal adhesion samples of Comparative Examples A1 and A2, the adhesion was poor. Also, in case of the metal adhesion samples of Comparative Examples A3 and A4, the shear strength was lowered remarkably after immersion in mineral oil at the high temperature, and thus the oil resistance was poor. In case of the metal adhesion sample of Comparative Example A5, both of the adhesion and oil resistance were very poor, and in case of the metal adhesion sample of Comparative Example A6, the adhesion was poor. In case of the metal adhesion sample of Comparative Example A7, the adhesion was very poor. In case of the metal adhesion sample of Comparative Example A8, the oil resistance was very poor so that spontaneous peeling off of the metal adhesion sample was observed after finishing immersion in mineral oil and heating. In case of the metal adhesion samples of Comparative Examples A9 and A10, the adhesion was poor. In case of the metal adhesion samples of Comparative Examples A11 and A13, the metal coating compositions were not cured, and thus it was impossible to evaluate the adhesion and oil resistance. In case of the metal adhesion samples of Comparative Examples A12 and A14, both of the adhesion and oil resistance were poor.

As explained above, in case of the coating composition for metal comprising the (meth)acryl-modified polyurethane according to the present invention with an amount in a specific range, the adhesion to metal was excellent, and the adhesion was maintained well even in mineral oil at high temperature, and thus the oil resistance was also excellent.

## Claims

1. A coating composition for metal comprising, based on total 100 parts by weight of the composition,

   5.1 to 64.9 parts by weight of (meth)acryl-modified polyurethane;
   7.1 to 74.9 parts by weight of (meth)acrylic monomer;
   2.1 to 44.9 parts by weight of epoxy resin;
   0.051 to 2.49 parts by weight of epoxy curing promotor; and
   0.00051 to 2.49 parts by weight of thermal polymerization initiator,
   wherein the (meth)acryl-modified polyurethane comprises i) polymerized units derived from anhydrosugar alcohol-alkylene oxide adduct; ii) polymerized units derived from polyisocyanate; and iii) polymerized units derived from hydroxyalkyl (meth)acrylate.

2. The coating composition for metal of claim 1, wherein the anhydrosugar alcohol-alkylene oxide adduct is an adduct obtained by reacting hydroxyl group(s) at both ends or one end of anhydrosugar alcohol with alkylene oxide, and wherein the alkylene oxide is a linear alkylene oxide having 2 to 8 carbons or a branched alkylene oxide having 3 to 8 carbons.

3. The coating composition for metal of claim 2, wherein the anhydrosugar alcohol is isosorbide, isomannide, isoidide or a mixture thereof.

4. The coating composition for metal of claim 1, wherein the polyisocyanate is methylenediphenyl diisocyanate (MDI), toluene diisocyanate (TDI), hexamethylene diisocyanate (HDI), isophorone diisocyanate (IPDI), or a combination thereof.

5. The coating composition for metal of claim 1, wherein the hydroxyalkyl (meth)acrylate is hydroxy-$C_{1-8}$alkyl (meth) acrylate.

6. The coating composition for metal of claim 1, wherein the (meth)acryl-modified polyurethane is represented by the following formula 2:

[Formula 2]

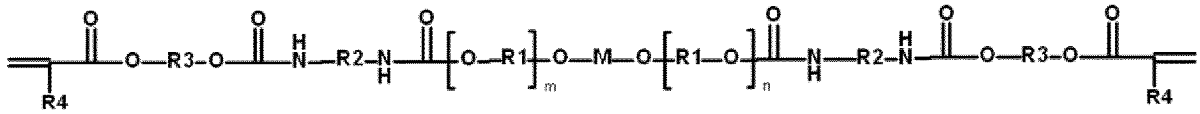

in the above formula 2,

each of R1 is independently an alkylene group,
each of R2 is independently an alkylene group, a cycloalkylene group, or an arylene group,
each of R3 is independently an alkylene group,
each of R4 is independently a hydrogen atom or an alkyl group,
M is a divalent organic group derived from anhydrosugar alcohol,
each of m and n independently represents an integer of 0 to 15, and
m+n represents an integer of 1 to 30.

7. The coating composition for metal of claim 1, wherein the (meth)acryl-modified polyurethane is that prepared by a method comprising the steps of: reacting anhydrosugar alcohol-alkylene oxide adduct and polyisocyanate to prepare intermediate having terminal isocyanate group; and reacting the intermediate and hydroxyalkyl (meth)acrylate.

8. The coating composition for metal of claim 1, wherein the (meth)acrylic monomer is a monomer having 1 to 4 (meth) acrylic groups in the molecule.

9. The coating composition for metal of claim 1, wherein the epoxy resin is a resin having 2 or more epoxy groups in the molecule.

10. The coating composition for metal of claim 1, wherein the thermal polymerization initiator is selected from compounds represented by the following formula 3-1, compounds represented by the following formula 3-2, or mixtures thereof:

[Formula 3-1]

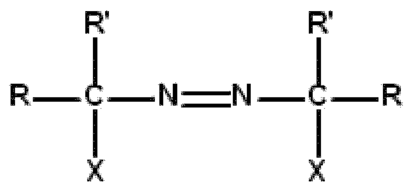

in the above formula 3-1,

each of R and R' is independently C2-C8 linear or C3-C8 branched alkyl group; C3-C20 cycloalkyl group; C6-C20 aryl group; or a C2-C8 linear or C3-C8 branched methoxy-alkyl group,
X is -CN or $-CO_2R''$, where R'' is C2-C8 linear or C3-C8 branched alkyl group; C3-C20 cycloalkyl group; or C6-C20 aryl group,

[Formula 3-2]

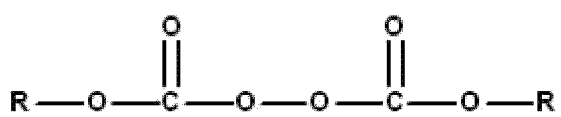

in the above formula 3-2,
each of R is independently C2-C8 linear or C3-C8 branched alkyl group; C3-C20 cycloalkyl group; or C6-C20 aryl group.

**11.** A method for preparing a coating composition for metal, comprising the step of mixing, based on total 100 parts by weight of the mixture, 5.1 to 64.9 parts by weight of (meth)acryl-modified polyurethane; 7.1 to 74.9 parts by weight of (meth)acrylic monomer; 2.1 to 44.9 parts by weight of epoxy resin; 0.051 to 2.49 parts by weight of epoxy curing promotor; and 0.00051 to 2.49 parts by weight of thermal polymerization initiator,
wherein the (meth)acryl-modified polyurethane comprises i) polymerized units derived from anhydrosugar alcohol-alkylene oxide adduct; ii) polymerized units derived from polyisocyanate; and iii) polymerized units derived from hydroxyalkyl (meth)acrylate.

**12.** The method for preparing a coating composition for metal of claim 11, wherein the mixing of the (meth)acryl-modified polyurethane, (meth)acrylic monomer, epoxy resin, epoxy curing promotor and thermal polymerization initiator is conducted under temperature condition of 60°C or lower.

**13.** A coated metallic article comprising:

a metallic article; and
a coating layer of the coating composition for metal of any one of Claims 1 to 10 on the surface of the metallic article.

## Patentansprüche

**1.** Beschichtungszusammensetzung für Metall, umfassend, bezogen auf insgesamt 100 Gewichtsteile der Zusammensetzung,

5,1 bis 64,9 Gewichtsteile (Meth)acryl-modifiziertes Polyurethan;
7,1 bis 74,9 Gewichtsteile (Meth)acrylmonomer;
2,1 bis 44,9 Gewichtsteile Epoxidharz;
0,051 bis 2,49 Gewichtsteile Epoxidhärtungsbeschleuniger; und
0,00051 bis 2,49 Gewichtsteile eines thermischen Polymerisationsinitiators,
wobei das (Meth)acryl-modifizierte Polyurethan i) polymerisierte Einheiten, die aus einem Anhydrozuckeralkohol-Alkylenoxid-Addukt deriviert sind; ii) polymerisierte Einheiten, die aus Polyisocyanat deriviert sind; und iii) polymerisierte Einheiten, die aus Hydroxyalkyl(meth)acrylat deriviert sind, umfasst.

**2.** Beschichtungszusammensetzung für Metall nach Anspruch 1, wobei das Anhydrozuckeralkohol-Alkylenoxid-Addukt ein Addukt ist, das durch Umsetzung der Hydroxylgruppe(n) an beiden Enden oder einem Ende des Anhydrozuckeralkohols mit Alkylenoxid erhalten wird, und wobei das Alkylenoxid ein lineares Alkylenoxid mit 2 bis 8 Kohlenstoffatomen oder ein verzweigtes Alkylenoxid mit 3 bis 8 Kohlenstoffatomen ist.

**3.** Beschichtungszusammensetzung für Metall nach Anspruch 2, wobei der Anhydrozuckeralkohol Isosorbid, Isomannid, Isoidid oder eine Mischung davon ist.

**4.** Beschichtungszusammensetzung für Metall nach Anspruch 1, wobei das Polyisocyanat Methylendiphenyldiisocyanat (MDI), Toluoldiisocyanat (TDI), Hexamethylendiisocyanat (HDI), Isophorondiisocyanat (IPDI) oder eine Kombination davon ist.

**5.** Beschichtungszusammensetzung für Metall nach Anspruch 1, wobei das Hydroxyalkyl(meth)acrylat Hydroxy-C1-8-alkyl(meth)acrylat ist.

**6.** Beschichtungszusammensetzung für Metall nach Anspruch 1, wobei das (Meth)acrylmodifizierte Polyurethan durch die folgende Summenformel 2 dargestellt wird:

[Summenformel 2]

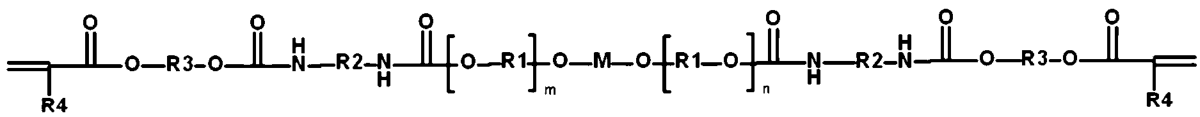

in der obigen Summenformel 2,

ist jedes R1 unabhängig voneinander eine Alkylengruppe,
ist jedes R2 unabhängig voneinander eine Alkylengruppe, eine Cycloalkylengruppe oder eine Arylengruppe,
ist jedes R3 unabhängig voneinander eine Alkylengruppe,
ist jedes R4 unabhängig voneinander ein Wasserstoffatom oder eine Alkylgruppe,
ist M eine zweiwertige organische Gruppe, die aus Anhydrozuckeralkohol deriviert ist,
steht jedes m und jedes n unabhängig voneinander für eine ganze Zahl von 0 bis 15, und
steht m+n für eine ganze Zahl von 1 bis 30.

**7.** Beschichtungszusammensetzung für Metall nach Anspruch 1, wobei das (Meth)acryl-modifizierte Polyurethan durch ein Verfahren hergestellt wird, das die folgenden Schritte umfasst: Umsetzen eines Anhydrozuckeralkohol-Alkylenoxid-Addukts und eines Polyisocyanats, um ein Zwischenprodukt mit einer endständigen Isocyanatgruppe herzustellen; und Umsetzen des Zwischenprodukts und eines Hydroxyalkyl(meth)acrylats.

**8.** Beschichtungszusammensetzung für Metall nach Anspruch 1, wobei das (Meth)acrylmonomer ein Monomer mit 1 bis 4 (Meth)acrylgruppen im Molekül ist.

**9.** Beschichtungszusammensetzung für Metall nach Anspruch 1, wobei das Epoxidharz ein Harz mit 2 oder mehr Epoxidgruppen im Molekül ist.

**10.** Beschichtungszusammensetzung für Metall nach Anspruch 1, wobei der thermische Polymerisationsinitiator aus Verbindungen ausgewählt ist, die durch die folgende Summenformel 3-1 dargestellt werden, Verbindungen, die durch die folgende Summenformel 3-2 dargestellt werden, oder Mischungen davon:

[Summenformel 3-1]

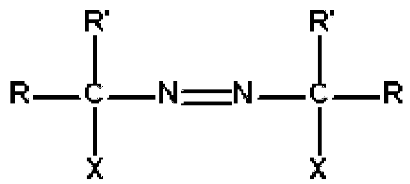

in der obigen Summenformel 3-1,

ist jedes R und R’ unabhängig voneinander eine lineare C2-C8- oder verzweigte C3-C8-Alkylgruppe; eine C3-C20-Cycloalkylgruppe; eine C6-C20-Arylgruppe; oder eine lineare C2-C8- oder verzweigte C3-C8-Methoxyalkylgruppe,
ist X -CN oder -CO2R", wobei R" eine lineare C2-C8- oder verzweigte C3-C8-Alkylgruppe; eine C3-C20-Cycloalkylgruppe oder eine C6-C20-Arylgruppe ist,

[Summenformel 3-2]

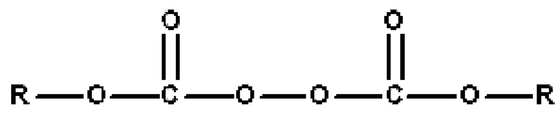

in der obigen Summenformel 3-2,
ist jedes R unabhängig voneinander eine lineare C2-C8- oder verzweigte C3-C8-Alkylgruppe, eine C3-C20-Cycloalkylgruppe oder eine C6-C20-Arylgruppe.

**11.** Verfahren zur Herstellung einer Beschichtungszusammensetzung für Metall, umfassend den Schritt des Mischens, basierend auf insgesamt 100 Gewichtsteilen der Mischung, von 5,1 bis 64,9 Gewichtsteilen (Meth)acryl-modifiziertem Polyurethan; 7,1 bis 74,9 Gewichtsteilen (Meth)acrylmonomer; 2,1 bis 44,9 Gewichtsteile Epoxidharz; 0,051 bis 2,49 Gewichtsteile Epoxidhärtungsbeschleuniger; und 0,00051 bis 2,49 Gewichtsteile eines thermischen Polymerisationsinitiators,
wobei das (Meth)acryl-modifizierte Polyurethan i) polymerisierte Einheiten, die aus einem Anhydrozuckeralkohol-Alkylenoxid-Addukt deriviert sind; ii) polymerisierte Einheiten, die aus Polyisocyanat deriviert sind; und iii) polymerisierte Einheiten, die aus Hydroxyalkyl(meth)acrylat deriviert sind, umfasst.

**12.** Verfahren zur Herstellung einer Beschichtungszusammensetzung für Metall nach Anspruch 11, wobei das Mischen des (Meth)acryl-modifizierten Polyurethans, des (Meth)acrylmonomers, des Epoxidharzes, des Epoxidhärtungsbeschleunigers und des thermischen Polymerisationsinitiators unter Temperaturbedingungen von 60°C oder weniger durchgeführt wird.

**13.** Beschichteter Metallgegenstand, umfassend:

einen Metallgegenstand; und
eine Beschichtungsschicht aus der Beschichtungszusammensetzung für Metall nach einem der Ansprüche 1 bis 10 auf der Oberfläche des Metallgegenstands.

**Revendications**

**1.** Composition de revêtement pour métal comprenant, sur la base d'un total de 100 parties en poids de la composition,

5,1 à 64,9 parties en poids de polyuréthane modifié par (méth)acryle ;
7,1 à 74,9 parties en poids de monomère (méth)acrylique ;
2,1 à 44,9 parties en poids de résine époxy ;
0,051 à 2,49 parties en poids de promoteur de durcissement d'époxy ; et
0,00051 à 2,49 parties en poids d'initiateur de polymérisation thermique,
dans laquelle le polyuréthane modifié par (méth)acryle comprend i) des motifs polymérisés dérivés d'un adduit alcool d'anhydrosucre-oxyde d'alkylène ; ii) des motifs polymérisés dérivés de polyisocyanate ; et iii) des motifs polymérisés dérivés de (méth)acrylate d'hydroxyalkyle.

**2.** Composition de revêtement pour métal selon la revendication 1, dans laquelle l'adduit alcool d'anhydrosucre-oxyde d'alkylène est un adduit obtenu par la mise en réaction d'un ou de plusieurs groupe(s) hydroxyle aux deux extrémités ou à une extrémité d'un alcool d'anhydrosucre avec de l'oxyde d'alkylène, et dans laquelle l'oxyde d'alkylène est un oxyde d'alkylène linéaire ayant 2 à 8 atomes de carbone ou un oxyde d'alkylène ramifié ayant 3 à 8 atomes de carbone.

**3.** Composition de revêtement pour métal selon la revendication 2, dans laquelle l'alcool d'anhydrosucre est l'isosorbide, l'isomannide, l'isoïdide ou un mélange de ceux-ci.

**4.** Composition de revêtement pour métal selon la revendication 1, dans laquelle le polyisocyanate est le diisocyanate de méthylènediphényle (MDI), le diisocyanate de toluène (TDI), le diisocyanate d'hexaméthylène (HDI), le diisocyanate d'isophorone (IPDI), ou une combinaison de ceux-ci.

**5.** Composition de revêtement pour métal selon la revendication 1, dans laquelle le (méth)acrylate d'hydroxyalkyle est le (méth)acrylate d'hydroxy-alkyle en $C_{1-8}$.

**6.** Composition de revêtement pour métal selon la revendication 1, dans laquelle le polyuréthane modifié par (méth) acryle est représenté par la formule 2 suivante :

[Formule 2]

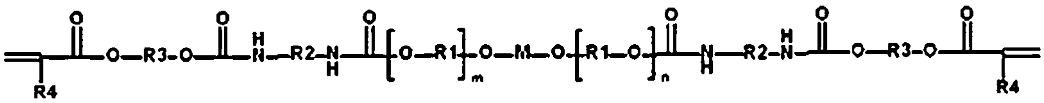

dans la formule 2 ci-dessus,

chacun des R1 est indépendamment un groupe alkylène,
chacun des R2 est indépendamment un groupe alkylène, un groupe cycloalkylène, ou un groupe arylène,
chacun des R3 est indépendamment un groupe alkylène,
chacun des R4 est indépendamment un atome d'hydrogène ou un groupe alkyle,
M est un groupe organique divalent dérivé d'alcool d'anhydrosucre,
chacun parmi m et n représente indépendamment un nombre entier de 0 à 15, et
m+n représente un nombre entier de 1 à 30.

**7.** Composition de revêtement pour métal selon la revendication 1, dans laquelle le polyuréthane modifié par (méth) acryle est celui préparé par un procédé comprenant les étapes de : la mise en réaction d'un adduit alcool d'anhydrosucre-oxyde d'alkylène et d'un polyisocyanate pour préparer un intermédiaire ayant un groupe isocyanate terminal ; et la mise en réaction de l'intermédiaire et de (méth)acrylate d'hydroxyalkyle.

**8.** Composition de revêtement pour métal selon la revendication 1, dans laquelle le monomère (méth)acrylique est un monomère ayant 1 à 4 groupe (méth)acryliques dans la molécule.

**9.** Composition de revêtement pour métal selon la revendication 1, dans laquelle la résine époxy est une résine ayant 2 groupes époxy ou plus dans la molécule.

**10.** Composition de revêtement pour métal selon la revendication 1, dans laquelle l'initiateur de polymérisation thermique est sélectionné parmi les composés représentés par la formule 3-1 suivante, les composés représentés par la formule 3-2 suivante, ou les mélanges de ceux-ci :

[Formule 3-1]

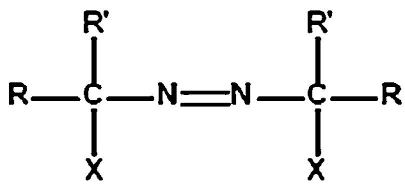

dans la formule 3-1 ci-dessus,

chacun des R et R' est indépendamment groupe alkyle linéaire en C2 à C8 ou ramifié en C3 à C8 ; groupe cycloalkyle en C3 à C20 ; groupe aryle en C6 à C20 ; ou groupe méthoxy-alkyle linéaire en C2 à C8 ou ramifié en C3 à C8,
X est -CN ou $-CO_2R''$, où R'' est groupe alkyle linéaire en C2 à C8 ou ramifié en C3 à C8 ; groupe cycloalkyle en C3 à C20 ; ou groupe aryle en C6 à C20,

[Formule 3-2]

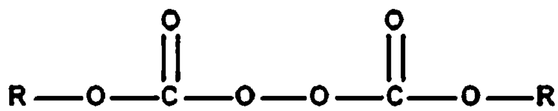

dans la formule 3-2 ci-dessus,
chacun des R est indépendamment groupe alkyle linéaire en C2 à C8 ou ramifié en C3 à C8 ; groupe cycloalkyle en C3 à C20 ; ou groupe aryle en C6 à C20.

**11.** Procédé de préparation d'une composition de revêtement pour métal, comprenant l'étape de mélanger, sur la base d'un total de 100 parties en poids du mélange, 5,1 à 64,9 parties en poids de polyuréthane modifié par (méth)acryle ; 7,1 à 74,9 parties en poids de monomère (méth)acrylique ; 2,1 à 44,9 parties en poids de résine époxy ; 0,051 à 2,49 parties en poids de promoteur de durcissement d'époxy ; et 0,00051 à 2,49 parties en poids d'initiateur de polymérisation thermique,

dans lequel le polyuréthane modifié par (méth)acryle comprend i) des motifs polymérisés dérivés d'un adduit alcool d'anhydrosucre-oxyde d'alkylène ; ii) des motifs polymérisés dérivés de polyisocyanate ; et iii) des motifs polymérisés dérivés de (méth)acrylate d'hydroxyalkyle.

**12.** Procédé de préparation d'une composition de revêtement pour métal selon la revendication 11, dans lequel le mélange du polyuréthane modifié par (méth)acryle, du monomère (méth)acrylique, de la résine époxy, du promoteur de durcissement d'époxy et de l'initiateur de polymérisation thermique est effectué dans des conditions de température de 60 °C ou moins.

**13.** Article métallique revêtu comprenant :

un article métallique ; et
une couche de revêtement de la composition de revêtement pour métal selon l'une quelconque des revendications 1 à 10 sur la surface de l'article métallique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101079518
- KR 1020120066904
- EP 2990428 A1
- KR 1020170125328